# EUROPÄISCHE PATENTANMELDUNG

(11) **EP 3 396 417 A1**
(43) Veröffentlichungstag der Anmeldung: **31.10.2018**
(21) Anmeldenummer: 17167875.8
(22) Anmeldetag: 25.04.2017
(51) Int. Cl.: G01S 19/40

(54) **ORTUNGSSYSTEM ZUR ORTUNG VON BEWEGLICHEN OBJEKTEN IN FLURSTÜCKEN VON SONDERKULTURFLÄCHEN**

(71) Anmelder: Vineyard Cloud GmbH, 76835 Burrweiler (DE)
(72) Erfinder: SAMBALE-LERGENMÜLLER, Marcel, 76835 Burrweiler (DE)
(74) Vertreter: Patentanwälte Dr. Keller, Schwertfeger Partnerschaft mbB

(57) **Zusammenfassung**

Die vorliegende Erfindung betrifft ein Ortungssystem und ein Verfahren zur Ortung von beweglichen Objekten in Flurstücken von Sonderkulturflächen, insbesondere Wein-, Obst- und Gemüseanbauflächen. Das Ortungssystem umfasst:
- eine Navigationseinrichtung zum Empfangen und Verarbeiten von Signalen eines globalen Navigationssatellitensystems für die Ermittlung und Bereitstellung von Navigationsdaten am Standort des beweglichen Objekts (2);
- Sender (4a, 4b, 4c), die an Grenzpunkten des Flurstückes (3) installiert sind, wobei jeder der Sender (4a, 4b, 4c) eine eindeutige Identifikationsnummer (ID) aussendet,
- eine Datenbank in die, die eindeutigen Identifikationsnummern (ID) der Sender (4a, 4b, 4c) und die zugeordneten Positionskoordinaten der Sender (4a, 4b, 4c) für den jeweiligen Grenzpunkt hinterlegt sind;
- einen Empfänger zum Empfangen der von den Sendern (4a, 4b, 4c) ausgesendeten eindeutigen Identifikationsnummern (ID),
- eine Verarbeitungseinheit, in der die empfangenen Identifikationsnummern (ID) der Sender (4a, 4b, 4c) und die von dem globalen Navigationssatellitensystem erhaltenen Navigationsdaten ausgewertet werden.

## Beschreibung

Die vorliegende Erfindung betrifft ein Ortungssystem zur Ortung von beweglichen Objekten in Flurstücken von Sonderkulturflächen, insbesondere Wein-, Obst- oder Gemüseanbauflächen und ein Verfahren hierzu.

Sonderkulturflächen bestehen insbesondere im Weinbau, dem Obstanbau oder beim Gemüseanbau und sind gekennzeichnet durch eine Zeilenbauweise, in denen die Kulturpflanzen entlang einer Zeile in den Boden eingepflanzt sind. Die Flurstücke oder Korridore zwischen den einzelnen Anbauzeilen sind zumeist von modernen Erntefahrzeugen, beispielsweise Traktoren oder anderen Landwirtschaftsgeräten, befahrbar. Im Weinbau sind solche Zeilen mit einem durchschnittlichen Abstand von ca. 2 Metern angelegt. Meistens lassen sich einzelne Flurstücke nicht ohne weiteres einem bestimmten Eigentümer bzw. Besitzer zuordnen, da die Anbauflächen in vielen Fällen ineinander übergehen. Da die zur Verfügung stehenden Anbauflächen optimal genutzt werden sollen, ist es schwierig zu erkennen, wo das Anbaugebiet des einen Gutsbesitzers endet und wo das Anbaugebiet eines anderen Gutsbesitzers beginnt, um die richtige Zeile einer Sonderkulturfläche zu bearbeiten.

Besonders problematisch wird dies während der Erntezeit. Denn in dieser Zeit bedarf es einer Vielzahl von Arbeitskräften. Hierzu werden häufig Saisonarbeiter eingestellt, die zum Teil zum ersten Mal im Anbaugebiet arbeiten. Hier ist die Gefahr groß, dass die Saisonarbeiter die Grenzen des Anbaugebietes nicht erkennen und unbeabsichtigt auf den Anbauflächen eines anderen Gutsbesitzers ernten oder eigene Anbauflächen vergessen. Ferner haben die Arbeitskräfte auch Schwierigkeiten sich in den Anbauflächen zurechtzufinden und zu dem ihnen zugewiesenen Arbeitsbereich zu gelangen.

Zunehmend werden für die Lösung dieser Schwierigkeiten moderne Hilfsmittel eingesetzt, beispielsweise auf dem globalen Navigationssatellitensystem basierende Einrichtungen. Diese sind jedoch bezüglich ihrer erzielbaren Genauigkeit großen Beschränkungen unterworfen, da selbst bei guten Empfangsbedingungen die Auflösung ohne Korrektur lediglich etwa 5 bis 20 Metern beträgt. Bei einem Zeilenabstand von 2 Metern, und manchmal auch weniger, kommen solche satellitengestützte Systeme an ihre Grenzen und vermögen nicht die oben dargestellten Schwierigkeiten zu überwinden. Das gilt beispielsweise für das WAAS (Wide Area Augmentation System) in Nordamerika und das EGNOS (European Geostationary Navigation Overlay Service) in Europa.

Es gibt bereits unterschiedliche Lösungen im Stand der Technik zur satellitengestützten Navigation von Fahrzeugen, insbesondere Landwirtschaftsfahrzeugen. Die US 6,947,662 beschreibt beispielsweise ein GPS-basiertes Verfolgungssystem für ein Landwirtschaftsfahrzeug (Traktor), bestehend aus einer Videokamera, einer GPS-Antenne und einem GPS-Empfänger. Fährt das Vehikel über ein zu bewirtschaftendes Feld, werden fortlaufend Fotografien von Teilen des Feldes angefertigt. Anhand der Navigationsdaten ist es möglich, den aufgenommenen Bildern konkrete Koordinaten zuzuordnen. Ziel ist es somit bildbasierte Navigationsdaten zu sammeln.

Die DE 20 2012 011 620 U1 beschreibt eine mobile Datenerfassungsvorrichtung für Weinberge. Hierbei ist eine Positionsbestimmung mithilfe des globalen Navigationssatellitensystems vorgesehen. Wie bereits oben erwähnt, sind solche GPSbasierten Navigationssysteme allerdings sehr ungenau und daher nur schlecht für eng beabstandete Zeilen bei Sonderkulturflächen einsetzbar. Weitere Lösungen zur Behebung dieses Problems werden in der Druckschrift nicht vorgeschlagen.

Einen anderen Ansatz beschreibt die WO 2016/082875 A1, bei der eine Vielzahl von Funksendern (Beacons) in einer lokalen Umgebung angeordnet werden, um eine Vielzahl von mobilen Vorrichtungen anhand dieser Sender in einer lokalen Umgebung zu navigieren. Dabei besitzt jede Route eine einzigartige Identifikationsnummer (ID), um so eine anonyme Navigation der einzelnen Teilnehmer zu ermöglichen. Es ist nicht vorgesehen, dass die Sender, neben der Routen-ID, eine eigene Identifikationsnummer (ID) aussenden, um die Position des Senders zu kennzeichnen. Bezogen auf den Zeilenbau als Sonderkulturflächen würde ein solches System eine Vielzahl von Sendern erfordern, um die einzelnen Routen abzustecken. Dies stellt einen enormen finanziellen und logistischen Aufwand dar.

Die US 8,988,285 B2 offenbart ein Verfahren und ein System zur Minimierung von Ungenauigkeiten bei Abstandsmessungen und Ortsbestimmungen bei autonomen Fahrzeugen verbesserten Navigation in einem Gebiet und/oder entlang einer Straße oder Flugbahn. Auch hier werden eine Vielzahl von Sendern (Beacons) eingesetzt. Ziel ist hierbei jedoch ein autonomes Fahren eines Fahrzeuges.

Die im Stand der Technik beschriebenen Systeme ermöglichen somit zwar eine Navigation oder Fahrzeugführung, sind aber auf die besonderen Bedürfnisse bei Sonderkulturanbauflächen nicht ausgelegt.

Es ist daher Aufgabe der vorliegenden Erfindung ein verbessertes Ortungssystem zur Ortung von beweglichen Objekten in Flurstücken von Sonderkulturflächen, insbesondere Wein-, Obst- oder Gemüseanbauflächen, sowie ein darauf gerichtetes Verfahren bereitzustellen, bei dem die Ungenauigkeiten GPS-basierter Funksysteme behoben oder zumindest signifikant verbessert werden.

Diese Aufgabe wird gelöst durch ein Ortungssystem zur Ortung von beweglichen Objekten in Flurstücken von Sonderkulturflächen, insbesondere Wein-, Obst- oder Gemüseanbauflächen gemäß Anspruch 1 und einem Verfahren gemäß Anspruch 7. Bevorzugte Ausführungsformen finden sich in den Unteransprüchen wieder.

Kerngedanke der vorliegenden Erfindung ist es, die (ungenauen) Signale und daraus generierte Daten von globalen Navigationssatellitensystemen zu verbessern, indem an den Eckpunkten von Flurstücken Funksender, vorzugsweise Beacons, installiert werden, mit deren Hilfe die Fehler und Ungenauigkeiten der globalen Navigationsdaten eliminiert werden. Erfindungsgemäß werden die von dem globalen Navigationssatellitensystem erhaltenen Positionskoordinaten eines beweglichen Objekts so transformiert, dass sie innerhalb einer Zeile des Flurstückes liegen, um dadurch den Besitzer einer mobilen Ortungsvorrichtung zum Anfang eines Flurstückes oder von dem Anfang einer Zeile des Flurstückes bis zu deren Ende zu führen.

Vorzugsweise handelt es sich bei der mobilen Ortungsvorrichtung um eine mobile Kommunikationseinrichtung, beispielsweise einem Smartphone oder eine andere portable Vorrichtung, die in ein Landwirtschaftsfahrzeug transportiert wird oder dort installierbar ist. Die Funksender (oder kurz: Sender) der Grenzpunkte sind mit einer eindeutigen Identifikationsnummer (ID) ausgerüstet, die wiederum mit ihren exakten Positionskoordinaten in einer Datenbank hinterlegt sind. Hierbei kann es sich um eine lokale Datenbank in der mobilen Kommunikationseinrichtung oder eine zentrale Datenbank handeln, die beispielsweise auf einem Server hinterlegt ist. Bei einer zentralisierten Datenbank erfolgt eine Datenübertragung über ein Netzwerk, beispielsweise über das Internet. Vorzugsweise sind errechnete Navigationsdaten hinterlegt, die durch eine Verbindung der einzelnen Eckpunkte einer Zeile des Flurstückes generiert werden. Mit den einzelnen Positionskoordinaten erhält man eine interpolierte Positionsgerade, die sich innerhalb eines befahrbaren Korridors eines Flurstückes befindet.

Die erhaltenen Navigationsdaten des globalen Navigationssatellitensystems generieren innerhalb eines bestimmten Radius eine Punktwolke mit den einzelnen Positionskoordinaten. Aufgrund der engen Zeilenbauweise von 2 Metern oder weniger liegen die meisten dieser Punktkoordinaten außerhalb des Soll-Bereichs, d.h. nicht innerhalb der zu bearbeitenden Zeile des Flurstückes. Mit Hilfe der Sender werden über die Verknüpfungen der Datenbank die ungenauen Navigationsdaten nun vom Soll-Bereich in den IST-Bereich transformiert. Dies geschieht vorzugsweise unter Anwendung einer mathematischen Annäherungsmethode oder eines Algorithmus, die/der zum einen die Navigationsdaten des globalen Navigationssatellitensystems auswertet, zum anderen aber auch die Sendersignale der nächstliegenden Sender. Anhand ihrer spezifischen ID lassen sich die nächstliegenden Sender genau identifizieren.

Das erfindungsgemäße Ortungssystem umfasst somit zunächst eine Navigationseinrichtung zum Empfangen und Verarbeiten von Signalen eines globalen Navigationssatellitensystems für die Ermittlung und Bereitstellung von Navigationsdaten am Standort des beweglichen Objekts. Hierbei kann es sich beispielsweise um einen Traktor oder einen mit dem Ortungssystem ausgestatteten menschlichen Erntehelfer handeln. Im Sinne der vorliegenden Erfindung umfasst ein "bewegliches Objekt" somit Menschen oder Vorrichtungen, die mit dem erfindungsgemäßen Ortungssystem ausgestattet sind.

Des Weiteren umfasst das Ortungssystem wenigstens einen Sender, der an einem Flureckpunkt installiert ist und ein elektromagnetisches Signal aussendet. Bevorzugt sind zwei oder mehr Sender, die zumindest an den Grenzpunkten des Flurstückes installiert sind, wobei jeder der Sender eine eindeutige Identifikationsnummer (ID) aussendet. Ferner ist eine Datenbank vorgesehen, in die die eindeutigen Identifikationsnummern (ID) der Sender und die der Sender zugeordneten Positionskoordinaten für den jeweiligen Grenzpunkt hinterlegt sind.

Ein Empfänger dient dem Empfang der von den einzelnen Sendern ausgesendeten eindeutigen Identifikationsnummern. Eine Verarbeitungseinheit wertet die von dem globalen Navigationssatellitensystem erhaltenen Navigationsdaten aus. Vorzugsweise befindet sich die hierfür erforderliche Verarbeitungseinheit direkt in der mobilen Kommunikationseinrichtung oder ist Teil einer Software. Die Verarbeitungseinheit ersetzt die über das globale Navigationssatellitensystem erhaltenen Navigationsdaten am Standort des beweglichen Objekts mit korrigierten Positionskoordinaten, die auf den in der Datenbank hinterlegten Positionskoordinaten der Grenzpunkte der nächstliegenden Sender oder davon interpolierten Navigationsdaten basieren. Vorzugsweise werden hierfür die satellitenbasierten Navigationsdaten zunächst einer Regressionsanalyse unterzogen, um einen Mittelwert zu erhalten, die der tatsächlichen Position des beweglichen Objekts möglichst nahe kommt. Die Positionskoordinaten der jeweiligen Sender werden vorzugsweise durch eine initiale Kartographie ermittelt. Dies kann beispielsweise über Hochleistungs-GNSS-Empfänger unter Verwendung von Referenzdaten eines Drittanbieters erfolgen. Durch diese Maßnahmen kann die Ungenauigkeit eines globalen Navigationssignals eines üblichen GPS-Systems behoben werden.

Vorzugsweise ist die Sendereichweite der einzelnen Sender begrenzt. In einer bevorzugten Variante ist vorgesehen, dass die Empfangseinheit eines Empfängers die Feldstärke der einzelnen Sender auswertet, um so zu ermitteln, welche Sender sich relativ zum bewegten Objekt am nächsten befinden. Vorzugsweise sind harmonisierte Feldstärken vorgesehen, indem die Sendeleistungen der einzelnen Sender derart angepasst werden, dass sie identische oder zumindest nahezu ähnliche Feldstärken aufweisen. Vorzugsweise arbeiten die Sender in einem Frequenzbereich von 140 MHz bis 70 GHz, vorzugsweise zwischen 2 GHz und 6 GHz. Bevorzugt sind daher Frequenzen im VHF-Band, dem UHF-Band oder dem ISM-Band. Beim letzteren hat sich die Anwendung von "Bluetooth" als Beacon-Frequenz besonders vorteilhaft erwiesen, da viele Smartphones oder Mobilgeräte bereits mit einer entsprechenden Sender-und Empfangseinheit ausgerüstet sind. Jedoch ist auch der Einsatz von Wireless-LAN (WLAN) möglich. Die Anzahl der Sender ist abhängig von der Art und Bebauung des jeweiligen Flurstückes. In einer bevorzugten Variante ist jedoch vorgesehen, dass die Sender sich zumindest an den Eckpunkten eines Flurstückes befinden. Dabei kann es ausreichend sein, dass die Sender jeweils nur am Anfang und am Ende einer Flurzeile positioniert werden. Alternativ können auch zwei oder n Sender diagonal versetzt zueinander an zwei oder n Flurstückeckpunkten angeordnet sein, wobei n die Anzahl der Eckpunkte wiedergibt.

Problematisch kann es sein, wenn es vier oder mehrere mögliche Zugänge zu einem Flurstück gibt, so dass deshalb vorzugsweise vier oder mehr Sender an den vier möglichen Eckpunkten zu positioniert werden.

Wird die Position des beweglichen Objekts durch die ID eines Senders in Kombination mit dem jeweiligen Datenbankeintrag bestätigt, weiß das System, wo sich das Objekt zum Abfragezeitpunkt gerade befindet. Auf diese Weise lässt sich auch ein Leitsystem planen, bei dem einzelne Sender entlang des jeweiligen Pfades angeordnet sind. Hierbei ist auch eine Wegeoptimierung bezogen auf die Reihenfolge der zu bearbeitenden Flurstücke möglich. Die Sender dienen dann als Marker, um die jeweiligen beweglichen Objekte durch die Flurzeilen zu leiten.

Zusätzlich ist es von Vorteil, dass in einer bevorzugten Variante die Verarbeitungseinheit die Bewegungsrichtung des beweglichen Objekts erkennt, indem sie die erhaltenen Navigationsdaten des Navigationssatellitensystems mit den in der Datenbank hinterlegten Positionskoordinaten der Sender transformiert, um so korrigierte Positionskoordinaten zu erhalten, die der tatsächlichen Position des beweglichen Objekts möglichst nahe kommen. Die korrigierten Positionskoordinaten entsprechen dann dem IST-Wert, der die tatsächliche Position markiert.

Es ist ferner bevorzugt, dass die Darstellung der über die Transformation der Navigationsdaten erhaltenen korrigierten Positionskoordinaten auf einer digitalen Karte am beweglichen Objekt erfolgt, so dass der Nutzer auch grafisch seine momentane Position erkennen kann. Dies kann beispielsweise das Display eines Smartphones oder eines GPS-Gerätes sein.

Bei einer bevorzugten Weiterbildung ist eine visuelle oder akustische Alarmierungseinrichtung vorgesehen, die ein visuelles oder akustisches Signal aussendet, wenn ein zuvor definierter Endpunkt eines Flurstückes von dem beweglichen Objekt erreicht wird. Somit wird der Benutzer gewarnt, wenn er den Anfang oder das Ende einer Flurzeile erreicht oder wenn er beispielsweise seinen Arbeitsbereich unbeabsichtigt verlassen sollte.

Gegenstand der vorliegenden Erfindung ist auch ein Verfahren zur Ortung von beweglichen Objekten in Flurstücken von Sonderkulturflächen, insbesondere Wein-, Obst- oder Gemüseanbauflächen, beispielsweise Spargel- oder Hopfenanbauflächen. Bei dem erfindungsgemäßen Verfahren werden zunächst einzelne Grenzpunkte eines Flurstückes kartographiert und für diese Grenzpunkte Punktkoordinaten ermittelt, die in einer Datenbank hinterlegt werden. In einem weiteren Schritt sieht das Verfahren vor, dass an den Grenzpunkten des Flurstückes Sender platziert werden, wobei jeder Sender eine eindeutige Identifikationsnummer (ID) aussendet.

Vorzugsweise kommen wenigstens zwei Sender zum Einsatz, welche das Flurstück diagonal versetzt an zwei Flureckpunkten begrenzen. In einer bevorzugten Variante werden vier Sender an entsprechenden Grenzpunkten eingesetzt. Weitere Varianten sehen vor, dass einzelne Grenzpunkte von Zeilen eines Flurstücks mit Sendern bestückt sind. Auch hier würde eine diagonal versetzte Anordnung der Sender funktionieren, so dass ein Zickzack-Muster entsteht, wenn die Sender durch eine Linie verbunden werden würden.

Die Identifikationsnummern (ID) der Sender werden mit den dazu gehörigen Positionskoordinaten der Grenzpunkte in einer Datenbank verknüpft. Das Verfahren sieht weiter vor, dass die Identifikationsnummern (ID) von den in dem Flurstück in Reichweite befindlichen Sendern empfangen und mit dem in der Datenbank hinterlegten Positionskoordinaten verglichen werden. Ferner wird auch ein satellitengestütztes Navigationssignal am Standort des beweglichen Objekts empfangen, um Navigationsdaten zu erhalten. In einem weiteren Schritt findet der Abgleich der empfangenen Navigationsdaten mit Hilfe der hinterlegten Positionskoordinaten der nächstliegenden Sender zum Erhalt der tatsächlichen Position des beweglichen Objekts statt. Hierfür werden die über das Navigationssatellitensystem erhaltenen Navigationsdaten des Standorts des beweglichen Objekts durch interpolierte Positionskoordinaten ersetzt. Diese basieren auf den in der Datenbank hinterlegten Positionskoordinaten der Grenzpunkte der nächstliegenden Sender oder auf davon interpolierten Positionskoordinaten, die beispielsweise anhand einer Geraden ermittelt wurden, die zwei Sender miteinander verbindet.

In einer Variante des Verfahrens ist es auch ausreichend, wenn die Position eines Senders kartographiert ist, so dass die Software die Näherungsposition und damit Position des beweglichen Objekts (z.B. des Landwirtschaftsfahrzeugs) errechnen kann.

Das erfindungsgemäße Verfahren ermöglicht es, dass auch Unkundige ein Flurstück exakt auffinden und bearbeiten können. Durch die Eliminierung von Ungenauigkeiten der der über das globale Navigationssatellitensystem erhaltenen Navigationsdaten ist es möglich, dass ein Arbeiter zeilengenau die zu dem jeweiligen zu bearbeitenden Flurstück gehörenden Anbauzeilen bearbeitet, ohne Zeilen zu vergessen oder nicht zum Flurstück gehörende fremde Zeilen zu bearbeiten. Die tatsächliche Position des beweglichen Objektes kann ferner an einen zentralen Server übertragen werden, so dass die Arbeitsabläufe überwacht werden können. Zudem ermöglicht das System eine Erfassung der bereits bearbeiteten Sonderkulturflächen.

Es hat sich als vorteilhaft erwiesen, dass insbesondere bei kurzen Flurstücken bei der Transformation eine Regressionsanalyse mit den erhaltenen Navigationsdaten des Navigationssatellitensystems durchgeführt wird. Mithilfe dieser Analyse kann auch die Position des beweglichen Objekts präzise bestimmt werden, selbst wenn es die Senderreichweite der nächstliegenden Sender verlässt, da das bewegliche Objekt dem Verlauf der Regressionsgerade oder der Regressionskurve mit einer bestimmbaren Geschwindigkeit folgt.

Vorzugsweise erfolgt die Transformation der über das Satellitensystem erhaltenen Navigationsdaten so, dass anhand der Positionskoordinaten der Sender und der gegebenenfalls erhaltenen Interpolationsgeraden korrigierte Positionskoordinaten erhalten werden, die der tatsächlichen Position des beweglichen Objekts entsprechen oder zumindest möglichst nahe kommen. Durch diese Transformation wird eine korrekte Zuordnung der Zeile, in der sich das bewegliche Objekt zum Ablagezeitpunkt gerade befindet, sichergestellt.

In einer bevorzugten Variante erfolgt die Ermittlung des nächstliegenden Senders eines Flurstückes anhand dessen Signalstärke. Dadurch werden auch im Falle überlagerter Signale nur solche Sender berücksichtigt, die der tatsächlichen Position des beweglichen Objekts am nächsten sind. Die nächstliegende Position des beweglichen Objekts zu einem Sender wird vorzugsweise durch eine Abstandsmessung des kürzesten Weges bestimmt.

Das erfindungsgemäße Verfahren eignet sich neben einer Routendurchführung auch für eine Routenoptimierung. Leitpunkte sind die einzelnen Sender der Eckpunkte sowie deren ID.

Die Erfindung wird in den nachfolgenden Ausführungsbeispielen näher erläutert.

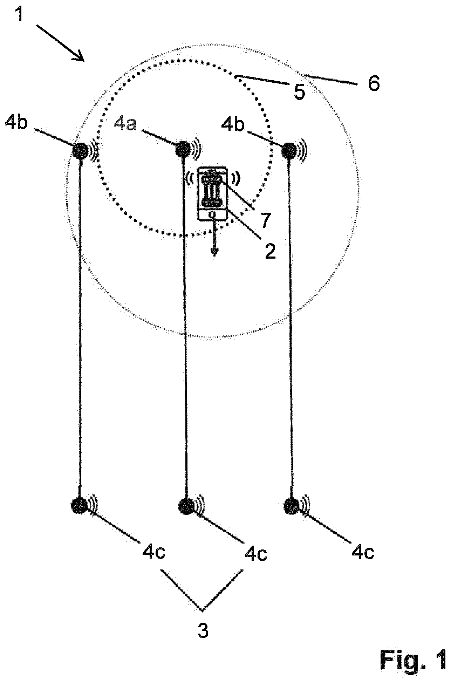

Figur 1 zeigt eine Ausführungsform des erfindungsgemäßen Ortungssystem 1 zur Ortung von beweglichen Objekten 2 in Flurstücken 3, die in Zeilenbauweise angelegt sind.

Das erfindungsgemäße Ortungssystem 1 ermöglicht es, die Ungenauigkeiten eines globalen satellitenbasierten Systems zu eliminieren. Die Ungenauigkeit der Navigationsdaten ist durch die Wolke 6 exemplarisch angedeutet. Die Sender 4a, 4b und 4c des Ortungssystems 1 befinden sich zumindest am Anfang und am Ende einer Zeile, vorzugsweise jeweils an den äußersten vier Eckpunkten des Flurstücks 3. Der Sender 4a bezeichnet den nächstliegenden Sender, während die Sender 4b und 4c die Eckpunkte markieren.

Jeder der Sender 4a, 4b, 4c senden eine für den jeweiligen Sender eindeutige ID aus, die zuvor in einer Datenbank mit der dazu gehörigen Punktkoordinate des jeweiligen Eckpunktes verknüpft wurde. Bei erfolgreichem Empfang der ID und erfolgreichem Abgleich mit der Datenbank wir die Ungenauigkeit der durch das Navigationssatellitensystem erhaltenen Navigationsdaten eliminiert und die tatsächliche Position wird als neuer IST-Wert definiert. Der Empfänger der mobilen Kommunikationseinrichtung (z.B. Smartphone) ist vorzugsweise mit einer GNSS-Empfangseinheit ausgerüstet, und zeichnet die einzelnen Punktkoordinaten in sehr kurzen Abständen auf. Aufgrund der oben angesprochenen Ungenauigkeit, weichen diese jedoch erheblich ab. Eine Verarbeitungseinheit berechnet jedoch bereits die Transformation und erkennt damit die Richtung. Die gleiche Funktionsweise erfolgt auch beim Richtungswechsel. Bei sehr kurzen Flurstücken wird vorzugsweise eine lineare Regressionsanalyse angewandt.

Der Empfang eines globalen Navigationssatellitensignals sowie der Identifikationsnummern (IDs) der im Flurstück 3 angeordneten Sender 4a, 4b und 4c erfolgt über eine mobile Kommunikationsvorrichtung eines beweglichen Objekts 2, insbesondere ein Smartphone, bei dem die tatsächliche Position des beweglichen Objekts 2 auf einem Display 7 angezeigt wird.

Die Positionskoordinaten der jeweiligen Sender werden durch eine initiale Kartographie ermittelt. Dies kann beispielsweise über Hochleistungs-GNSS-Empfänger unter Verwendung von Referenzdaten eines Drittanbieters erfolgen.

Die Sender 4a, 4b und 4c senden fortlaufend oder in einem definierten Zeitabstand jeweils ihre eindeutige ID innerhalb einer festgelegten Frequenz mit einer bestimmten Sendeleistung oder Feldstärke. Sofern die Sender auf unterschiedlichen Sendefrequenzen senden, können sie die ID gleichzeitig senden. In einer bevorzugten Variante kann jedoch auch vorgesehen sein, dass die Sender 4a, 4b und 4c ihre Kennung nacheinander, d.h. zeitversetzt, auf derselben Sendefrequenz senden. Exemplarisch ist die Reichweite des Senders 4a mit dem Punktradius 5 dargestellt.

Eine Weiterentwicklung des Ortungssystems sieht bei mehreren Anbauflächen vor, dass die Sender jeder Anbaufläche ihre ID mit einer eindeutigen und dieser Anbaufläche zugeordneten Sendefrequenz aussenden.

Im gezeigten Beispiel empfängt der Empfänger des beweglichen Objekts 2 das Sendesignal des Senders 4a und die Sendesignale der Sender 4b und 4c. In den empfangen Sendesignalen sind die jeweiligen eindeutigen IDs kodiert. Die Verarbeitungseinheit liest aus den Sendesignalen die eindeutigen Identifikationsnummern heraus und ordnet diese den in der Datenbank dazu hinterlegten Positionskoordinaten zu. Die zugeordneten Positionskoordinaten werden von der Verarbeitungseinheit interpoliert. Die interpolierten Positionskoordinaten ersetzen die Navigationsdaten am Standort des beweglichen Objektes 2, wodurch eine sehr genaue Bestimmung des Standorts des beweglichen Objekts 2 möglich ist.

Der am beweglichen Objekt 2 dargestellte Pfeil bezeichnet die Bewegungsrichtung des beweglichen Objekts 2. Dieses entfernt sich von dem Sender 4a und bewegt sich entlang der Zeile geradlinig zum Sender 4c. Werden einzelne Sender erreicht, so können diese bestätigt werden, d.h. das System erkennt, dass der betreffende Sender gerade von dem beweglichen Objekt 2 passiert wurde. Bei Bedarf kann hierzu auch ein akustischer oder visueller Alarm ausgelöst werden. Sollte sich nun das bewegliche Objekt 2 in eine Richtung begeben, bei denen eine Zeile eines Flurstücks 3 nicht von Sendern 4a, 4b oder 4c markiert ist, weiß der Arbeiter, dass diese Zeile nicht bearbeitet werden soll.

Das erfindungsgemäße Ortungssystem und das Verfahren bieten den Vorteil, dass auch Ortsfremde zielgenau eine Bearbeitung der jeweiligen Flurstücke 3 vornehmen können. Der Ortsunkundige weiß genau, welches Flurstück zu bearbeiten ist, wann es beginnt, und wann es aufhört. Dadurch wird verhindert, dass einzelne Zeilen eines Flurstückes vergessen werden und der Ernteertrag wird erhöht.

## Patentansprüche

1. Ortungssystem zur Ortung von beweglichen Objekten in Flurstücken von Sonderkulturflächen, insbesondere Wein-, Obst- oder Gemüseanbauflächen, umfassend
- eine Navigationseinrichtung zum Empfangen und Verarbeiten von Signalen eines globalen Navigationssatellitensystems für die Ermittlung und Bereitstellung von Navigationsdaten am Standort des beweglichen Objekts (2);
- Sender (4a, 4b, 4c), die an Grenzpunkten des Flurstückes (3) installiert sind, wobei jeder der Sender (4a, 4b, 4c) eine eindeutige Identifikationsnummer (ID) aussendet,
- eine Datenbank in die, die eindeutigen Identifikationsnummern (ID) der Sender (4a, 4b, 4c) und die zugeordneten Positionskoordinaten der Sender (4a, 4b, 4c) für den jeweiligen Grenzpunkt hinterlegt sind;
- einen Empfänger zum Empfangen der von den Sendern (4a, 4b, 4c) ausgesendeten eindeutigen Identifikationsnummern (ID),
- eine Verarbeitungseinheit, in der die empfangenen Identifikationsnummern (ID) der Sender (4a, 4b, 4c) und die von dem globalen Navigationssatellitensystem erhaltenen Navigationsdaten ausgewertet werden,
**dadurch gekennzeichnet, dass** die Verarbeitungseinheit die über das globale Navigationssatellitensystem erhaltenen Navigationsdaten am Standort des beweglichen Objekts (2) mit interpolierten Positionskoordinaten basierend auf den in der Datenbank hinterlegten Positionskoordinaten der Grenzpunkte der nächstliegenden Sender (4a, 4b) zum Erhalt der tatsächlichen Position des beweglichen Objekts (2) ersetzt.

2. Ortungssystem nach Anspruch 1, **dadurch gekennzeichnet, dass** die im Flurstück (3) positionierten Sender (4a, 4b, 4c) ein Signal im Frequenzbereich von 140 MHz bis 70 GHz, vorzugsweise zwischen 2 GHz und 6 GHz, aussenden.

3. Ortungssystem nach Anspruch 1 und 2, dass die Verarbeitungseinheit die Bewegungsrichtung des beweglichen Objekts (2) erkennt, indem sie die erhaltenen Navigationsdaten des Navigationssatellitensystems mit den in der Datenbank hinterlegten Positionskoordinaten der Sender (4a, 4b, 4c) transformiert, um so korrigierte Positionskoordinaten zu erhalten, die der tatsächlichen Position des beweglichen Objekts (2) möglichst nahe kommen.

4. Ortungssystem nach Anspruch 3, **dadurch gekennzeichnet, dass** die Darstellung der über die Transformation der Navigationsdaten erhaltenen korrigierten Positionskoordinaten auf einer digitalen Karte am beweglichen Objekt erfolgt.

5. Ortungssystem nach einem der Ansprüche 1 bis 4, **dadurch gekennzeichnet, dass** ein visuelle oder akustische Alarmierungseinrichtung vorgesehen ist, die ein visuelles oder akustisches Signal aussendet, wenn ein zuvor definierter Endpunkt eines Flurstückes (3) von dem beweglichen Objekt (2) erreicht wird.

6. Ortungssystem nach einem der Ansprüche 1 bis 5, **dadurch gekennzeichnet, dass** der Empfang des globalen Navigationssatellitensignals sowie der eindeutigen Identifikationsnummern der im Flurstück (3) angeordneten Sender (4a, 4b, 4c) über eine mobile Kommunikationsvorrichtung, insbesondere ein Smartphone (7), erfolgt, die ferner mit der Verarbeitungseinheit und der Datenbank ausgerüstet ist, um so die tatsächliche Position auf dem Display des Smartphone anzeigen zu lassen.

7. Verfahren zur Ortung von beweglichen Objekten in Flurstücken von Sonderkulturflächen, insbesondere Wein-, Obst- oder Gemüseanbauflächen, umfassend die folgenden Schritte:
- Kartographieren einzelner Grenzpunkte eines Flurstückes (3) und Ermitteln von Punktkoordinaten für diese Grenzpunkte zum Hinterlegen in einer Datenbank,
- Platzieren von Sendern (4a, 4b, 4c) an Grenzpunkten des Flurstückes (3), wobei jeder Sender eine eindeutige Identifikationsnummer (ID) aussendet,
- Verknüpfen der Identifikationsnummern (ID) der Sender mit den dazugehörigen Positionskoordinaten der Grenzpunkte in einer Datenbank,
- Empfangen der Identifikationsnummern (ID) von den in dem Flurstück (3) in Reichweite befindlichen Sendern (4a, 4b, 4c),
- Vergleichen der von den Sendern (4a, 4b, 4c) empfangenen Identifikationsnummern (ID) mit den in der Datenbank hinterlegten Positionskoordinaten,
- Empfangen eines satellitengestützten Navigationssignals am Standort des beweglichen Objekts (2) zum Erhalt von Navigationsdaten,
- Abgleich der empfangenen Navigationsdaten mit Hilfe der hinterlegten Positionskoordinaten der nächstliegenden Sender (4a, 4b) zum Erhalt der tatsächlichen Position des beweglichen Objekts (2), wobei die über das Navigationssatellitensystem erhaltenen Navigationsdaten des Standorts des beweglichen Objekts (2) mit interpolierten Positionskoordinaten basierend auf den in der Datenbank hinterlegten Positionskoordinaten der Grenzpunkte der nächstliegenden Sender (4a, 4b) ersetzt werden.

8. Verfahren nach Anspruch 7, **dadurch gekennzeichnet, dass** die Positionierung der Sender (4a, 4b, 4c) zumindest am Anfang und Ende einer Zeile, vorzugsweise an den äußersten vier Eckpunkten des Flurstücks (3) erfolgt.

9. Verfahren nach Anspruch 7 oder 8, **dadurch gekennzeichnet, dass** die Interpolation der Positionskoordinaten am Standort des beweglichen Objekts (2) durch eine lineare Regression der bekannten Positionskoordinaten der Sender (4a, 4b, 4c) an den Grenzpunkten erfolgt.

10. Verfahren nach einem der Ansprüche 7 bis 9, **dadurch gekennzeichnet, dass** die Bewegungsrichtung des beweglichen Objekts (2) erkannt wird, indem die erhaltenen Navigationsdaten des Navigationssatellitensystems mit den in der Datenbank hinterlegten Positionskoordinaten der nächstliegenden Sender (4a, 4b) transformiert werden, um so korrigierte Positionskoordinaten über die tatsächliche Position des beweglichen Objekts (2) zu erhalten.

11. Verfahren nach einem der Ansprüche 7 bis 10, **dadurch gekennzeichnet, dass** bei der Transformation eine Regressionsanalyse mit den erhaltenen Navigationsdaten des Navigationssatellitensystems durchgeführt wird.

12. Verfahren nach Anspruch 11, **dadurch gekennzeichnet, dass** die Transformation der Navigationsdaten so erfolgt, dass die korrigierten Positionskoordinaten des beweglichen Objekts (2) innerhalb einer Zeile des nächstliegenden Flurstücks (3) liegen.

13. Verfahren nach einem der Ansprüche 7 bis 12, **dadurch gekennzeichnet, dass** die nächstliegenden Sender (4a, 4b) eines Flurstückes (3) anhand ihrer Signalstärke ermittelt werden.

14. Verfahren nach Anspruch nach einem der Ansprüche 7 bis 13, **dadurch gekennzeichnet, dass** das Kartographieren der Grenzpunkte des Flurstückes (3) und das Ermitteln von Punktkoordinaten für diese Grenzpunkte über einen GNSS-Empfänger mit hoher Genauigkeit unter Verwendung von Referenzdaten eines Drittanbieters erfolgt.

15. Verfahren nach einem der Ansprüche 7 bis 14, **dadurch gekennzeichnet, dass** mehrere auf dem Weg des beweglichen Objekts zugeordneten Positionskoordinaten und/oder durch Positionskoordinaten ersetzten Navigationskoordinaten und/oder transformierten Navigationskoordinaten in einer Datenbank des beweglichen Objekts hinterlegt und/oder an ein Überwachungssystem gesendet werden, um anhand dieser Daten eine Routenoptimierung durchzuführen.

## Geänderte Patentansprüche

### Geänderte Patentansprüche gemäss Regel 137(2) EPÜ.

1. Ortungssystem zur Ortung von beweglichen Objekten in Flurstücken von Sonderkulturflächen, insbesondere Wein-, Obst- oder Gemüseanbauflächen, umfassend
- eine Navigationseinrichtung zum Empfangen und Verarbeiten von Signalen eines globalen Navigationssatellitensystems für die Ermittlung und Bereitstellung von Navigationsdaten am Standort des beweglichen Objekts (2);
- Sender (4a, 4b, 4c), die an Grenzpunkten des Flurstückes (3) installiert sind, wobei jeder der Sender (4a, 4b, 4c) eine eindeutige Identifikationsnummer (ID) aussendet,
- eine Datenbank in die, die eindeutigen Identifikationsnummern (ID) der Sender (4a, 4b, 4c) und die zugeordneten Positionskoordinaten der Sender (4a, 4b, 4c) für den jeweiligen Grenzpunkt hinterlegt sind;
- einen Empfänger zum Empfangen der von den Sendern (4a, 4b, 4c) ausgesendeten eindeutigen Identifikationsnummern (ID),
- eine Verarbeitungseinheit, in der die empfangenen Identifikationsnummern (ID) der Sender (4a, 4b, 4c) und die von dem globalen Navigationssatellitensystem erhaltenen Navigationsdaten ausgewertet werden,
**dadurch gekennzeichnet, dass** die Verarbeitungseinheit die über das globale Navigationssatellitensystem erhaltenen Navigationsdaten am Standort des beweglichen Objekts (2) mit interpolierten Positionskoordinaten basierend auf den in der Datenbank hinterlegten Positionskoordinaten der Grenzpunkte der nächstliegenden Sender (4a, 4b) zum Erhalt der tatsächlichen Position des beweglichen Objekts (2) ersetzt, wobei die Interpolation der Positionskoordinaten am Standort des beweglichen Objekts (2) durch eine lineare Regression der bekannten Positionskoordinaten der Sender (4a, 4b, 4c) an den Grenzpunkten erfolgt.

2. Ortungssystem nach Anspruch 1, **dadurch gekennzeichnet, dass** die im Flurstück (3) positionierten Sender (4a, 4b, 4c) ein Signal im Frequenzbereich von 140 MHz bis 70 GHz, vorzugsweise zwischen 2 GHz und 6 GHz, aussenden.

3. Ortungssystem nach Anspruch 1 und 2, dass die Verarbeitungseinheit die Bewegungsrichtung des beweglichen Objekts (2) erkennt, indem sie die erhaltenen Navigationsdaten des Navigationssatellitensystems mit den in der Datenbank hinterlegten Positionskoordinaten der Sender (4a, 4b, 4c) transformiert, um so korrigierte Positionskoordinaten zu erhalten, die der tatsächlichen Position des beweglichen Objekts (2) möglichst nahe kommen.

4. Ortungssystem nach Anspruch 3, **dadurch gekennzeichnet, dass** die Darstellung der über die Transformation der Navigationsdaten erhaltenen korrigierten Positionskoordinaten auf einer digitalen Karte am beweglichen Objekt erfolgt.

5. Ortungssystem nach einem der Ansprüche 1 bis 4, **dadurch gekennzeichnet, dass** ein visuelle oder akustische Alarmierungseinrichtung vorgesehen ist, die ein visuelles oder akustisches Signal aussendet, wenn ein zuvor definierter Endpunkt eines Flurstückes (3) von dem beweglichen Objekt (2) erreicht wird.

6. Ortungssystem nach einem der Ansprüche 1 bis 5, **dadurch gekennzeichnet, dass** der Empfang des globalen Navigationssatellitensignals sowie der eindeutigen Identifikationsnummern der im Flurstück (3) angeordneten Sender (4a, 4b, 4c) über eine mobile Kommunikationsvorrichtung, insbesondere ein Smartphone (7), erfolgt, die ferner mit der Verarbeitungseinheit und der Datenbank ausgerüstet ist, um so die tatsächliche Position auf dem Display des Smartphone anzeigen zu lassen.

7. Verfahren zur Ortung von beweglichen Objekten in Flurstücken von Sonderkulturflächen, insbesondere Wein-, Obst- oder Gemüseanbauflächen, umfassend die folgenden Schritte:
- Kartographieren einzelner Grenzpunkte eines Flurstückes (3) und Ermitteln von Punktkoordinaten für diese Grenzpunkte zum Hinterlegen in einer Datenbank,
- Platzieren von Sendern (4a, 4b, 4c) an Grenzpunkten des Flurstückes (3), wobei jeder Sender eine eindeutige Identifikationsnummer (ID) aussendet,
- Verknüpfen der Identifikationsnummern (ID) der Sender mit den dazugehörigen Positionskoordinaten der Grenzpunkte in einer Datenbank,
- Empfangen der Identifikationsnummern (ID) von den in dem Flurstück (3) in Reichweite befindlichen Sendern (4a, 4b, 4c),
- Vergleichen der von den Sendern (4a, 4b, 4c) empfangenen Identifikationsnummern (ID) mit den in der Datenbank hinterlegten Positionskoordinaten,
- Empfangen eines satellitengestützten Navigationssignals am Standort des beweglichen Objekts (2) zum Erhalt von Navigationsdaten,
- Abgleich der empfangenen Navigationsdaten mit Hilfe der hinterlegten Positionskoordinaten der nächstliegenden Sender (4a, 4b) zum Erhalt der tatsächlichen Position des beweglichen Objekts (2), wobei die über das Navigationssatellitensystem erhaltenen Navigationsdaten des Standorts des beweglichen Objekts (2) mit interpolierten Positionskoordinaten basierend auf den in der Datenbank hinterlegten Positionskoordinaten der Grenzpunkte der nächstliegenden Sender (4a, 4b) ersetzt werden, wobei die Interpolation der Positionskoordinaten am Standort des beweglichen Objekts (2) durch eine lineare Regression der bekannten Positionskoordinaten der Sender (4a, 4b, 4c) an den Grenzpunkten erfolgt.

8. Verfahren nach Anspruch 7, **dadurch gekennzeichnet, dass** die Positionierung der Sender (4a, 4b, 4c) zumindest am Anfang und Ende einer Zeile, vorzugsweise an den äußersten vier Eckpunkten des Flurstücks (3) erfolgt.

9. Verfahren nach einem der Ansprüche 7 bis 8, **dadurch gekennzeichnet, dass** die Bewegungsrichtung des beweglichen Objekts (2) erkannt wird, indem die erhaltenen Navigationsdaten des Navigationssatellitensystems mit den in der Datenbank hinterlegten Positionskoordinaten der nächstliegenden Sender (4a, 4b) transformiert werden, um so korrigierte Positionskoordinaten über die tatsächliche Position des beweglichen Objekts (2) zu erhalten.

10. Verfahren nach einem der Ansprüche 7 bis 9, **dadurch gekennzeichnet, dass** bei der Transformation eine Regressionsanalyse mit den erhaltenen Navigationsdaten des Navigationssatellitensystems durchgeführt wird.

11. Verfahren nach Anspruch 10, **dadurch gekennzeichnet, dass** die Transformation der Navigationsdaten so erfolgt, dass die korrigierten Positionskoordinaten des beweglichen Objekts (2) innerhalb einer Zeile des nächstliegenden Flurstücks (3) liegen.

12. Verfahren nach einem der Ansprüche 7 bis 11, **dadurch gekennzeichnet, dass** die nächstliegenden Sender (4a, 4b) eines Flurstückes (3) anhand ihrer Signalstärke ermittelt werden.

13. Verfahren nach Anspruch nach einem der Ansprüche 7 bis 12, **dadurch gekennzeichnet, dass** das Kartographieren der Grenzpunkte des Flurstückes (3) und das Ermitteln von Punktkoordinaten für diese Grenzpunkte über einen GNSS-Empfänger mit hoher Genauigkeit unter Verwendung von Referenzdaten eines Drittanbieters erfolgt.

14. Verfahren nach einem der Ansprüche 7 bis 13, **dadurch gekennzeichnet, dass** mehrere auf dem Weg des beweglichen Objekts zugeordneten Positionskoordinaten und/oder durch Positionskoordinaten ersetzten Navigationskoordinaten und/oder transformierten Navigationskoordinaten in einer Datenbank des beweglichen Objekts hinterlegt und/oder an ein Überwachungssystem gesendet werden, um anhand dieser Daten eine Routenoptimierung durchzuführen.
